# EUROPEAN PATENT SPECIFICATION

(11) **EP 0 607 738 B1**
(45) Date of publication and mention of the grant of the patent: **07.05.1997**
(21) Application number: 93500134.7
(22) Date of filing: 04.10.1993
(51) Int. Cl.: C08F 220/16, G01J 1/58

(54) **Aqueous solutions of acrylic polymers**
Wässrige Lösungen von Acrylpolymeren
Solutions aqueuses de polymères acryliques

(30) Priority: 22.10.1992 ES 9202104
(43) Date of publication of application: 27.07.1994
(73) Proprietor: LABORATORIOS MIRET, S.A., 08228 Les Fonts-Terrassa (Barcelona) (ES)
(72) Inventor: Contijoch, Agusti, ES-08034 Barcelona (ES)
(74) Representative: Ponti Sales, Adelaida

(56) References cited:
- EP-A- 0 381 029
- DE-A- 1 594 005
- DATABASE WPI Section Ch, Week 8303, Derwent Publications Ltd., London, GB; Class A, AN 83-06161K & JP-A-57 198 716 (DAIICHI KOGYO SEIYAKU)
- CHEMICAL ABSTRACTS, vol. 83, no. 8, 25 August 1975, Columbus, Ohio, US; abstract no. 59348, NISHINO ET AL. 'stereoregularities of acrylic polymers containing bulky substituents obtained by radical polymerization' & KOBUNSHI RONBUNSHU, vol.31, no.5, 1974 pages 298 - 304
- DATABASE WPI Section Ch, Week 8303, Derwent Publications Ltd., London, GB; Class A, AN 83-06161K & JP-A-57 198 716

## Description

The present invention relates to aqueous solutions of acrylic polymers (copolymers or terpolymers) used as dispersing agents, said polymers having fluorescence properties which allow the rapid and easy determination of their concentration particularly in water treatment systems as well as in other systems where these polymers are used such as in the formation of stable dispersions of salts and pigments.

The invention further relates to the process of obtaining said solutions.

### BACKGROUND OF THE INVENTION

Industrial installations such as refineries, petrochemical plants, chemical and metallurgical industries use circulating and recirculating water for processes such as cooling, condensation, filtering. They also use industrial water supplies for steam boilers, generators, exchangers. Said water transports salts and material in suspension which can be deposited in the conduits or on the surfaces of industrial equipment where there is principally heat transfer, thereby forming an accumulation of waste which alters the water flow and the energy transfer processes.

This fact has forced the industries of today to carry out treatment of industrial water in order to alleviate and minimize the effects on said installations. Industrial water treatment has undergone several drastic changes, due principally to the need to make the water profitable as well as to protect the environment. For this reason the classical treatment techniques, based on high levels of chromates or zinc derivatives with a pH varying between acidic and neutral, have diminished considerably and new solutions have been sought which respond to the criteria of environmental protection.

Nowadays other types of treatment process are therefore employed based on organic polymers like acrylic or methacrylic polymers which are soluble in water and have a low molecular weight, either alone or combined with low concentrations of metallic inhibitors, in particular zinc salts. In both types of treatment it is possible to use an alkaline pH in the recirculating systems.

The use of said organic polymers as dispersing agents brings with it the difficulty of determining their concentration in industrial water by means of common chemical methods, due principally to their low concentration (generally less than 100 ppm) and the interference which may be produced by the presence of other components which are usually present in industrial water.

Apart from these difficulties there is also the need for rapid and frequent control of the concentrations of said polymers in industrial water since their margins of effectiveness and performance are very fine.

To overcome said drawbacks, dispersing agents which have traceable properties such as molecular fluorescence are currently sought. The property of molecular fluorescence exhibited by said polymers would make possible continuous analysis and monitoring of the dispensing system.

The use of fluorescence agents among chemical compounds is not in itself new. Information is available about obtaining photosensitive polymers which can respond to the phenomenon of fluorescence but in the solid state. One example of this is the European Patent EP 324,480 which deals with the production of photosensitive emulsions. Furthermore, fluorescence techniques have been used in research into the structural properties of acrylic polymers. The following works cite examples of the use of said techniques:
- Shigeo Tazuke et al., Macromolecules, vol. 12, 5, Sep-Oct 1979.
- Shigeo Tazuke et al., Macromolecules, vol. 21, p. 1046-51, 1988.
- Shigeo Tazuke et al., Macromolecules, vol. 22, p. 729-734, 1989.

These works describe the effects which the principal polymeric chains can have on the mobility of the lateral chains by means of introducing fluorescence tracers into the polymer.

In the field of industrial water treatment, cooling systems, boiler systems, there are works which show how the use of fluorescence tracers in these areas can represent a useful solution. Of these works it is worth citing the following:
- G. Bohnsack, K.H. Lee, D.A. Johnson & E. Buss, "Investigation of the Mechanisms of Organics Compounds Used in Cooling Water Corrosion Control", Materials Performance, Vol. 25, 5, p. 32, 1986.
- S.N. Davis, G.M. Thompson, H.W. Bentley & G. Stiles, "Ground Water Tracers- A sort Review", Ground Water, Vol. 18, 1, p. 14, 1980.
- V.R. Apte, S.N. Kaul & V. Raman, "Fluorescents Tracers and Measurement of Fluorescents", Indian Journal of Environmental Health, Vol. 18, 3, p. 169, 1969.
- D.L. Feuerstein & R.E. Selleck, "Fluorescents Tracers for Dispersion Measurements", Journal of the Sanitary Engineering Division, Vol. ASCE 89, SA4, p. 1, 1963.
- P.L. Smart & I.M.S. Laidlaw, "An Evaluation of Some Fluorescent Dyes for Water-Tracing", Water-Resources Research, Vol. 13, 1, p. 15, 1977.
- C.C. Pierce & D.A. Grattan, "Chemical and Physical Parameters Controlling Polymer Performance in Boiler Systems", National Association of Corrosion Engineers, Paper 205, CORROSION/88, St. Louis, Missouri, March 21-25, 1988.
- B.E. Moriarty, B.E. Hunt & D.R. Malec, "Monitoring Polymeric Treatment Programs in Alkaline Cooling Water", National Association of Corrosion Engineers, Paper 156, CORROSION/89, New Orleans, Louisiana, April 17-21, 1989.

Finally it is worth mentioning that the work "Use of fluorescent tracers to monitor internal boiler treatments and to determine boiler operating parameters", Nalco Chemical Co., cites the following as the principal characteristics which a tracer for boiler systems should have:
- The tracer must be thermally stable and not decompose at the working temperature of the boiler.
- The tracer must be inert to the boiler environment, which means that it must not alter the conductivity of the water or of its solid content; It must not interfere with the behaviour of the treatment programmes; It must not vaporize or condense; It must be easy to control and monitor; Finally, it must be innocuous, non-contaminating and when used must not increase the cost of the water treatment process.

Said conditions are the requirements of a tracer for boiler water systems and can, after being modified accordingly, also correspond to the requirements of a tracer for the treatment of industrial water.

The preparation of polyacrylic derivatives by polymerization by means of free radicals starting with the corresponding acidic monomers and the copolymerizable products believed to be suitable have been known for a long time. Some of said processes are included in works such as "The Encyclopedia of Chemical Technology", Kirk-Othmer. Among these methods it is worth indicating the standard techniques referred to as "organic solvent method" and "aqueous method".

The process by means of the "organic solvent method" is carried out using organic compounds such as toluene, benzene, terbutanoil, as solvents, and has drawbacks such as the use of inflammable products and the need to eliminate the organic solvent from the solution in order to obtain a product which is soluble in water.

The process based on the "aqueous method" takes place in solution with low concentrations of monomers up to a maximum of 30 % of the total of the solution, since for values higher than this limit polymerization is more difficult as it is an exothermic process which means it is more difficult to control the energy in the form of heat which is given out during the process. This process normally uses indicators such as oxygenated water, potassium or sodium persulphate or organic peroxides and redox systems. By using the "aqueous method" it is possible to obtain polymers with a reproducibility of molecular size which does not exceed 5%.

With the "aqueous method" the characteristics and means of obtaining aqueous solutions of polyacrylic acids, their copolymers and the corresponding salts, are known from the Spanish patent PI 549073 filed on 20.11.85 by "Laboratorios Miret, S.A.".

To obtain the best results, both technically and economically, it is among others an important condition to obtain the highest possible concentrations of the polymers in solution. In certain applications this enables small doses of aqueous solution to be incorporated in the system to be treated, with the resulting advantage that the system or systems to be treated are not substantially altered.

The conditions for the production process are:
- Relatively low concentrations of monomers, varying between 10 and 30 %.
- Production temperatures of between 5 and 50°C.
- The process should be carried out at atmospheric pressure and without atmosphere of inert gas.
- The technique of adding the polymerization controller products must ensure reproducibility of the molecular size of the polymer obtained. Said adding technique consists of choosing the monomer concentration, the adding sequences and concentration of the catalysts according to the Claims of the Spanish Patent ES-549.073.

### DESCRIPTION OF THE INVENTION

One principal object of the present invention is to obtain aqueous solutions of copolymers and/or terpolymers from monomers of acrylic and/or methacrylic acids, their sodium, potassium or ammonium salts, aliphatic derivatives of said acids, and derivatives of said acids and phenyl, p-hydroxyphenyl, phenyl-4-sulphonic, 1-naphthyl, 2-naphthyl, 4-hydroxy-2-naphthyl, 2-naphthyl-4-sulphonic radicals, and other products derived from the phenyl and/or naphthyl groups, and is characterized in that at least one of said monomers is a fluorescent tracer which corresponds to the following type: where: 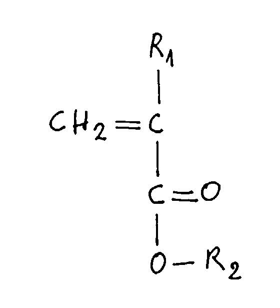
R₁ corresponds to a hydrogen, methyl or hydroxyl radical.
R₂ corresponds to a radical such as phenyl, p-hydroxyphenyl, p-phenyl-sulphonic, 1-naphtyl, 2-naphthyl, 4-hydroxy-2-naphthyl, 2-naphthyl-4-sulphonic or other derivatives of phenyl and or napthyl groups
whereby when chemically combined, to form the copolymer and/or terpolymer, said monomers transfers its fluorescence properties thereto. Said properties enable the polymer concentration to be detected and determined, particularly in water treatment systems.

The fluorescent properties of said monomers are incorporated in the polymer during the production thereof in such a way that any difference in behaviour between the tracer and the active material is eliminated since the tracer radical forms part of the polymer.

The aqueous solutions of copolymers and/or ter-polymers obtained from monomers of acrylic and/or methacrylic acids which have molecular fluorescent properties have the following chemical structure: 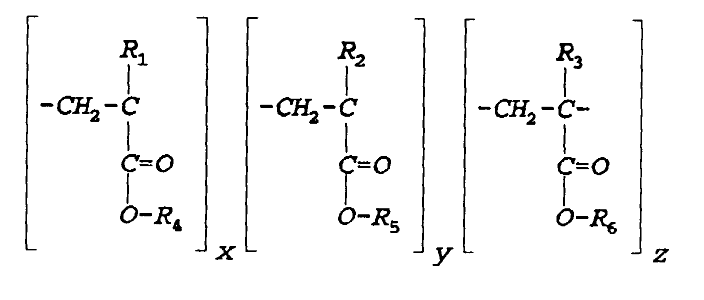 where:
R₁, R₂ and R₃ correspond to hydrogen, methyl or hydroxyl radicals.
R₄ corresponds to hydrogen, sodium, potassium or ammonium radicals.
R₅ corresponds to radicals such as methyl, ethyl, n-propyl
R₆ corresponds to radicals such as phenyl, p-hydroxy-phenyl, phenyl-4-sulphonic, 1-naphthyl, 2-naphthyl, 4-hydroxy-2-naphthyl, 2-naphthyl-4-sulphonic or other derivative of phenyl and/or naphthyl groups.
x, y and z, expressed in molar percentages of the total amount of the polymers, can vary between the following limiting values:
   x between 70 and 90
   y between 5 and 30
   z up to 5

In any case the molecular weight of the polymer obtained is always less than 20.000 and preferably less than 10.000.

Said copolymers and/or terpolymers with fluorescence properties are used as dispersing agents both to obtain stable suspensions, in time, of pigments or supports in the ceramic, paint, paper or similar such industries, or alternatively as dispersing agents for water insoluble salts or materials which are liable to become deposited on the surfaces of conduits, heat exchangers or other similar closed systems for transporting fluids, with the advantage that it is easy to detect them and determine their concentration.

The process of obtaining said aqueous solutions of polymers and/or terpolymers from monomers of acrylic and/or methacrylic acids begins with the polymerization in an aqueous medium of monocarboxylic acids, with a ethylenic link in the molecule and with a maximum of six carbon atoms, aliphatic esters of said acids with linear alcohols of one to three carbon atoms and esters of the same acids with linear alcohols of one to three carbon atoms and esters of the same acids with aromatic alcohols of one to three condensed benzene rings joined to the rest of the acid in position "two" and possibly with substituents such as -OH or -SO₃H in position "four".

To obtain said water soluble polymers in useful concentrations, and in higher concentrations for optimum marketability, it is necessary to use catalysts which consist either of a mixture ammonium, sodium or potassium salts of persulphuric acid, hydrogen peroxide or organic peroxides, or alternatively of oxidation-reduction pairs of the previously mentioned chemicals with sodium metabisulphate, sodium bisulphate, ascorbic acid or thioglycolic acid.

Said soluble polymers are obtained in such a way that the monomer tracer concentration is proportional to the concentration of the polymer so that by detecting the concentration of the monomer tracer it is possible to determine the concentration of the polymer.

This allows continuous control and analysis using spectrofluorimeters provided with a microprocessor, which in turn permits constant monitoring of the concentrations and automatic control of the polymer dispersing system in industrial water.

The use of polymers with fluorescent probes allows continuous control and thereby improves the level of cleanliness, reducing the amount of fouling in heat exchangers and water treatment systems. This means that cleaning operations, during which the system has to be shut down, can be carried out less frequently in the installations in which said polymers are used.

### BRIEF DESCRIPTION OF THE DRAWINGS

In order that what is disclosed in the present description be better understood, there are a number of accompanying drawings which represent oner example of a practical embodiment of the invention in an industrial-type installation.

Figure 1 shows a diagram of a pilot cooling tower fitted with a continuous control and detection system based on fluorescence.

Figure 2 shows a graph representing the control of the concentration (variable y) of a polymer with a fluorescent probe in aqueous solution against time in days (variable y) based on the fluorescence method.

Figure 3 shows a graph of the control of the concentration (variable x) of a conventional polymer in aqueous solution against time in days (variable x) based on the turbidimetry method.

### DESCRIPTION OF THE PREFERRED EMBODIMENTS

Below are detailed various examples of processes for obtaining aqueous solution of acrylic and methacrylic polymers with fluorescence properties. By means of these different processes aqueous solutions are obtained with different percentages by weight, different performances and different physical properties.

### Example I

- 40 kg of de-ionized water are fed into a reactor provided with reflux, agitation, heating and cooling elements, as well as temperature controllers, and are cooled to a temperature of 5 °C. Once said temperature has been reached 2.0 kg of acrylic acid and 0.5 kg of 2-naphthyl acrylate are added at the same time as 0.2 kg of thioglycolic acid and 0.108 kg of ammonium persulphate dissolved in 0.292 kg of de-ionized water. After agitation for 15 minutes the same quantities as above are added again with the exception of the initial water. This operation is carried out every 20 minutes to a total of 10 times. Afterwards the mixture is heated to about 70 °C and is left at this temperature for a period of 4 hours, after which it is cooled and then neutralized with 32 kg of sodium hydroxide to 50 % water.

The result is 103 kg of an aqueous solution of polymer with 37 % by weight of solids and an intrinsic viscosity of 0.071.

### Example II

- 40 kg of de-ionized water are fed into the same reactor described in the above example and are cooled to a temperature of 5 °C. Once said temperature has been reached 2.0 kg of acrylic acid, 0.5 kg of methyl acrylate and 0.05 kg of 2-naphthyl acrylate are added, followed thereafter by 0.2 kg of thioglycolic acid and 0.118 kg of ammonium persulphate dissolved in 0.292 kg of de-ionized water. The mixture is agitated and after 15 minutes the same quantities as above are added again with the exception of the initial water, said addition operation being repeated every 20 minutes to a total of 10 times. Afterwards the mixture is heated to about 70 °C and is left at this temperature for a period of 4 hours, after which it is cooled and then neutralized with 32 kg of sodium hydroxide to 50 % water. The result is 103.5 kg of an aqueous solution of polymer with 37 % by weight of solids and an intrinsic viscosity of 0.058.

### Example III

- 40 kg of de-ionized water are fed into the same reactor described in the above example and are cooled to a temperature of 5 °C. Once said temperature has been reached 2.0 kg of acrylic acid, 0.5 kg of methyl acrylate and 0.5 kg of 2-naphthyl acrylate are added, followed thereafter by 0.2 kg of thioglycolic acid and 0.0972 kg of ammonium persulphate dissolved in 0.292 kg of de-ionized water. The mixture is agitated and after 15 minutes the same quantities as above are added again with the exception of the initial water, said addition operation being repeated every 20 minutes to a total of 10 times. Afterwards the mixture is heated to about 70 °C and is left at this temperature for a period of 4 hours, after which it is cooled and then neutralized with 32 kg of sodium hydroxide to 50 % water. The result is 103.5 kg of an aqueous solution of polymer with 37 % by weight of solids and an intrinsic viscosity of 0.08.

For the three products obtained by the controlled addition processes described a static calcium carbonate precipitation inhibition test is carried out in order to determine the minimum dose of inhibitor which guarantees an inhibition equal to or greater than 75 %.

Said test consists of preparing solution which contain calcium and carbonate ions in concentrations which are greater (supersaturated solutions) than those predicted by their solubility product, in the presence of different doses of inhibitor.

The precipitation of calcium carbonate is encouraged by changing the initial conditions of temperature (increasing the temperature to 45 °C) and acidity (increasing the pH from 10.5 to 10.8) under static conditions for 1 hour.

By evaluating the amount of calcium in the sample filtered relative to the initial concentration thereof (300 ml/l as CaCO₃) the percentage inhibition can be obtained.

The results obtained are indicated in Table I which shows that in the case of each of the three products a dose of 40 ppm achieves an inhibition factor greater than 75 %.

**TABLE I**

| Product | Product Dose | % Inhibition |
|---|---|---|
| Blank test | 0.0 | 12.5 |
| | 15.0 | 35.5 |
| I | 25.0 | 50.0 |
| | 40.0 | 85.0 |
| | 15.0 | 32.0 |
| II | 25.0 | 45.0 |
| | 40.0 | 78.0 |
| | 15.0 | 35.0 |
| III | 25.0 | 49.0 |
| | 40.0 | 83.0 |

These products were tested in a pilot cooling tower where the effectiveness as scale inhibitors/dispersants of the three aqueous solutions obtained according to the three examples was demonstrated.

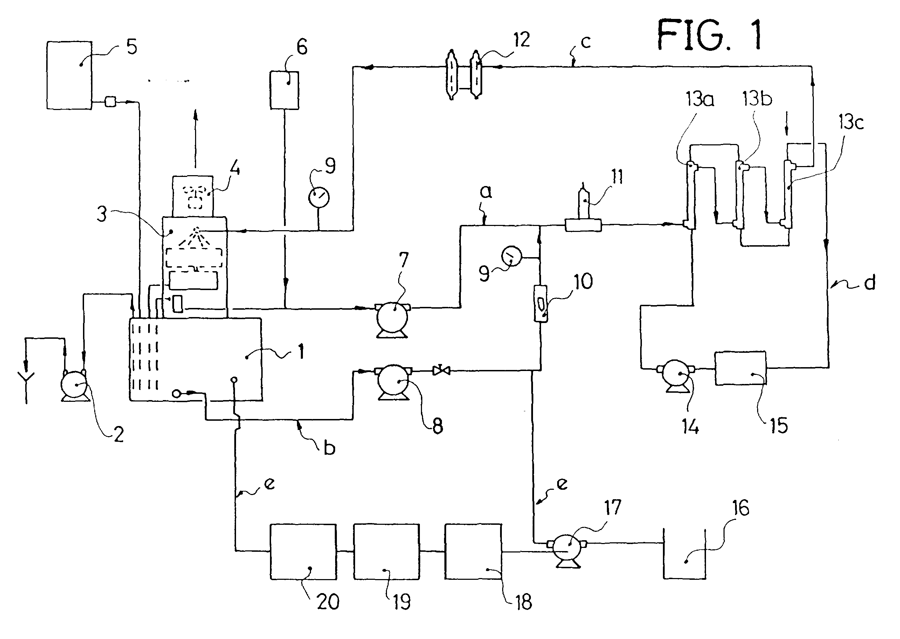

The pilot cooling tower shown in figure 1 consists of three isolated circuits: the water circuits a, b and c (circulation, recirculation and return), circuit d for the product to be treated and circuit e for controlling and detecting the fluorescent dispersant/inhibitor product.

The water circuit consists of a reservoir 1 with a primer 2, a tower 3 with an inert filling and a vapour extractor 4, a water supply storage tank 5, a storage tank 6 and an acid feeder pump 7, a recirculation pump 8, a thermometer 9, a flowmeter 10, a pH control electrode and a number of corrosion control probes 12.

The circuit for the product to be treated consists of a number of heat exchangers 13a, 13b, 13c, a circulation pump 14 and a product heating element 15.

The fluorescent dispersant/inhibitor control and detection circuit consists of a storage tank 16 of the fluorescent product, an electric product feeder pump 17, a microprocessor 18, a fluorescence detector 19 and a discontinuous feeder 20.

Using this pilot cooling tower it is possible to simulate the initial conditions to which the cooling water is to be subjected in order to determine the final conditions and the results of the effect of the dispersant/inhibitor obtained from the different solutions. This system is provided with a constant supply of fresh water from the storage tank 5, a primer 2 to maintain the required concentrations, a water speed and flow circulation control element 10 and an automatic water pH control 11.

The product control and detection system consists of a continuous flux cell detector 19 fed by a solenoid valve. The data produced by the detector 19 are sent to a microprocessor 18 which controls the electric product feeder pump 17, activating or disactivating said pump when the concentration of the product is below or above the established levels.

Tests were carried out on the degree of fouling. Once said test were completed the amount of fouling in the pilot heat exchangers was evaluated. The data obtained are shown in Table II:

**TABLE II**

| Test | Product | Dose (ppm) | Fouling (mg/m²·h) |
|---|---|---|---|
| 1 | I | 40,0 | 80,0 |
| 2 | II | 40,0 | 100,0 |
| 3 | III | 40,0 | 92,0 |

The results obtained on the level of fouling were less than 200 mg/m²·h which is equivalent to a fouling factor of less than 2.5·10⁻⁵ °C/Kcal which during the period over which the test was carried out was considered to be the maximum acceptable value.

The test conditions were as follows:
- Return to tower temperature = 40 ± 1 °C
- Heat exchanger flow speed = 1 cm/s
- pH = 7.8 to 8.0
- Test duration = 14 days
- Product concentration = 40 ± 2 ppm

The characteristics of the water within the circuit were as follows:
TCa = 800 to 1000 ppm as CaCO₃
TH = 1200 to 1400 ppm as CaCO₃
Cl = 1000 to 1300 ppm as Cl⁻
TAC = 150 to 300 ppm as CaCO₃

Finally the behaviour of the polymer solution obtained in example I is compared with that of another polymer obtained under the same conditions but in which the fluorescent probe is not introduced, the analysis of the residual being carried out by conventional methods. The results of the degree of fouling obtained in each of the two cases are shown in Table III.

**TABLE III**

| Test | Product | Method of Analysis | Fouling (mg/m²·h) |
|---|---|---|---|
| 4 | Polymer I | Molecular fluorescence | 82.0 |
| 5 | Polymer without probe | Conventional | 115.0 |

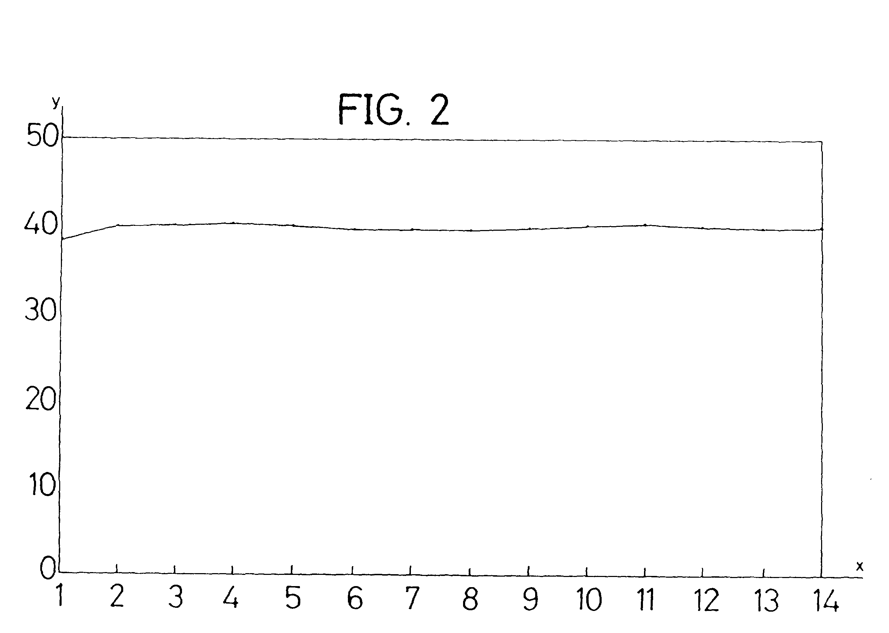

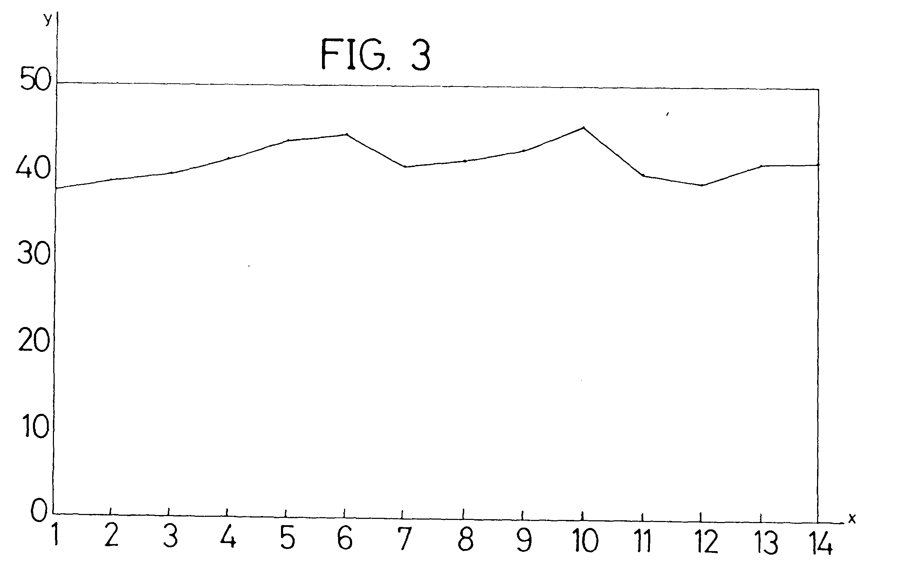

The difference in behaviour can be explained by looking at the concentration of the polymer with the fluorescent probe (figure 2) and the concentration of the polymer without the probe (figure 3) against time (in days).

The degree of fouling or the cleanliness inside the heat exchangers in tests 1 and 4, using the polymer obtained by the process described in example I, is due principally to the continuous action of the control system on the polymer concentration, making whatever adjustment is required to the water/polymer system.

In the case of fluorescent polymers, control of the polymer concentration is continuous and the level of concentration achieved is more or less constant, as can be seen in the graph shown in figure 2, with very small variations. In the case of polymers without fluorescent properties, the oscillations are considerable, as can be seen in the graph shown in figure 3, affecting the levels of fouling.

## Claims

1. Aqueous solutions of copolymers and/or terpolymers obtained from monomers of acrylic and/or methacrylic acids, their sodium, potassium or ammonium salts, aliphatic derivatives of said acids with linear alcohols of one to three carbon atoms and derivatives of said acids with phenyl, p-hydroxyphenyl, phenyl-4-sulphonic, 1-naphthyl, 2-naphthyl, 4-hydroxy-2-naphthyl, 2-naphthyl-4-sulphonic groups and other products derived from the phenyl and/or naphthyl groups, characterized in that at least one of said monomers is a fluorescent tracer which corresponds to the general formula I: 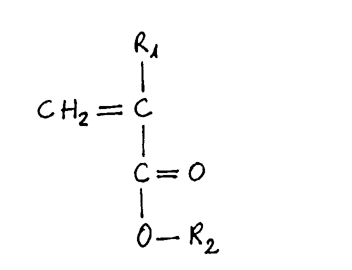 where:
R₁ corresponds to a hydrogen, methyl or hydroxyl radical.
R₂ corresponds to a radical such as phenyl, p-hydroxyphenyl, p-phenyl-sulphonic, 1-naphthyl, 2-naphthyl, 4-hydroxy-2-naphthyl, 2-naphthyl-4-sulphonic or other derivatives of phenyl and/or naphtyl groups
whereby when chemically combined, to form the copolymer and/or terpolymer, said monomer transfers its fluorescence properties thereto.

2. Aqueous solutions, according claim 1, where the polymers have the general formula II: 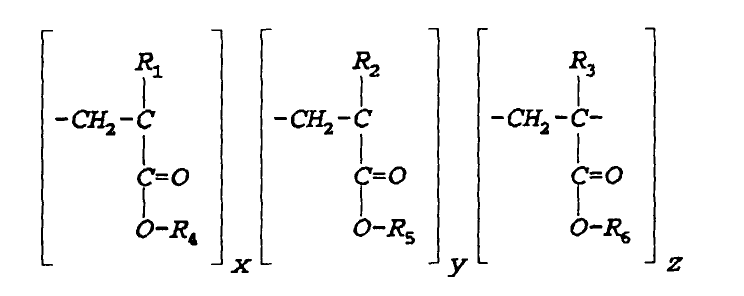 where:
R₁, R₂, and R₃ correspond to hydrogen, methyl or hydroxyl radicals.
R₄ corresponds to hydrogen, sodium, potassium or ammonium radicals.
R₅ corresponds to radicals such as methyl, ethyl, n-propyl.
R₆ corresponds to radicals such as phenyl, p-hydroxyphenyl,
phenyl-4-sulphonic acid, 1-naphthyl, 2-naphthyl, 4-hydroxy-2-naphthyl, 2-naphthyl-4-sulphonic or other derivatives of phenyl and/or naphthyl groups.
x, y and z, expressed in molar percentages of the total amount of the polymers, can vary between the following limiting values:
x between 70 and 90
y between 5 and 30
z up to 5
In any case the molecular weight of the polymer obtained is always less than 20.000 and preferably less than 10.000.

3. Aqueous solutions according to claim 1 or 2 characterized in that the concentration of the tracer is proportional to the concentration of the polymer.

4. A process for obtaining aqueous solutions of copolymers and/or terpolymers from monomers of acrylic and/or methacrylic acids, their sodium, potassium or ammonium salts, aromatic and aliphatic derivatives of said acids and derivatives with phenyl, p-hydroxyphenyl, phenyl-4-sulphonic acid 1-naphthyl and 2-naphthyl, 4-hydroxy-2-naphthyl, 2-naphthyl-4-sulphonic and other products derived from the phenyl and/or naphthyl groups, characterized in that at least one of said polymerization monomers is a fluorescent tracer having a general formula I: 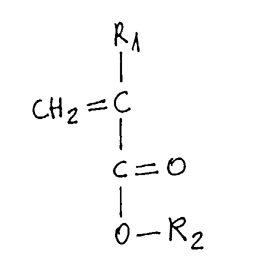 where:
R₁ corresponds to a hydrogen, methyl or hydroxyl radical.
R₂ corresponds to a radical phenyl, p-hydroxyphenyl, p-phenyl-sulphonic, 2-naphthyl, 4-hydroxy-2-naphthyl, 2-naphthyl-4-sulphonic or other derivates of phenyl and/or naphtyl groups
whereby when chemically combined, to form the copolymer and/or terpolymer, it can be detected and its concentration determined, particularly in water treatment systems.

5. A process for obtaining aqueous solutions according to claim 4 which consists of the polymerization in an aqueous medium of monocarboxylic acids with a ethylenic link in the molecule and with a maximum of six carbon atoms, aliphatic esters of said acids with linear alcohols of one to three carbon atoms and esters of the same acids with aromatic alcohols characterized in that they have one to three condensed benzene rings joined to the rest of the acid in position "two" and possibly with substituents such as -OH or -SO₃H in position "four".

6. A process for obtaining aqueous solutions according to claim 4 characterized in that the catalysts used for said process are either a mixture ammonium, sodium or potassium salts of persulphuric acid, hydrogen peroxide or organic peroxides, or alternatively are oxidation-reduction pairs of the previously mentioned chemicals with sodium metabisulphate, sodium bisulphate, ascorbic acid or thioglycolic acid.

7. The use of aqueous solutions according to any of claims 1 to 3 for the automatic determination of the polymer concentration in industrial water.

## Patentansprüche

1. Wäßrige Lösungen von Copolymeren und/oder Terpolymeren, die aus Monomeren von Acrylsäuren und/Methacrylsäuren, ihren Natrium-, Kalium- oder Ammoniumsalzen, aliphatischen Derivaten dieser Säuren mit linearen Alkoholen mit einem bis drei Kohlenstoffatomen und Derivaten dieser Säuren mit Phenyl-, p-Hydroxyphenyl-, Phenyl-4-sulfonsäure-, 1-Naphthyl-, 2-Naphthyl-, 4-Hydroxy-2-naphthyl-, 2-Naphthyl-4-sulfonsäuregruppen und anderen, von Phenyl- und/oder Naphthylgruppen abgeleiteten Produkten erhalten wurden, dadurch gekennzeichnet, daß zumindest eines der Monomere ein Fluoreszenz-Tracer ist, der der allgemeinen Formel I entspricht: 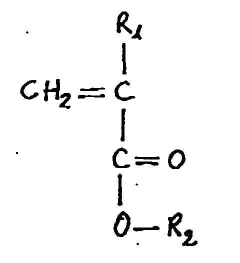 wobei
R₁ einem Wasserstoff-, Methyl- oder Hydroxylrest entspricht;
R₂ einem Phenyl-, p-Hydroxyphenyl-, p-Phenyl-sulfonsäure-, 1-Naphthyl-, 2-Naphthyl-, 4-Hydroxy-2-naphthyl-, 2-Naphthyl-4-sulfonsäurerest, oder anderen Derivaten der Phenyl- und/oder Naphthylgruppen entspricht, wobei, wenn sie chemisch verbunden werden, das Copolymer und/oder das Terpolymer ausgebildet wird, wobei das Monomer seine Fluoreszenzeigenschaften hierauf überträgt.

2. Wäßrige Lösung nach Anspruch 1, wobei die Polymere die allgemeine Formel II aufweist: 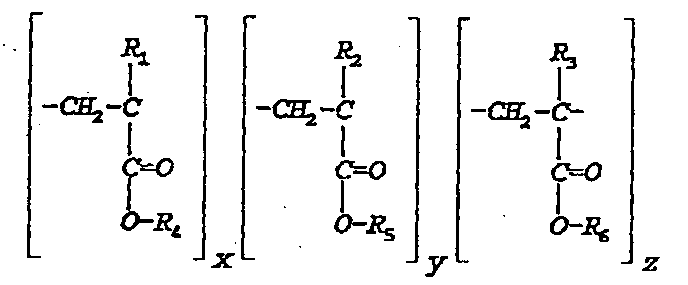 wobei:
R₁, R₂ und R₃ Wasserstoff-, Methyl- oder Hydroxylresten entsprechen;
R₄ Wasserstoff-, Natrium-, Kalium- oder Ammoniumresten entspricht;
R₅ Methyl-, Ethyl-, n-Propylresten entspricht;
R₆ Phenyl-, p-Hydroxyphenyl-, Phenyl-4-sulfonsäure-, 1-Naphthyl-, 2-Naphthyl-, 4-Hydroxy-2-naphthyl-, 2-Naphthyl-4-sulfonsäure- oder anderen Derivaten des Phenyls und/oder der Naphthylgruppen entspricht;
x, y und z, ausgedrückt in Molprozenten auf der Grundlage der Gesamtmenge der Polymere, zwischen den nachfolgenden Grenzwerten variieren kann:
x zwischen 70 und 90
y zwischen 5 und 30
z bis zu 5,
wobei in jedem Fall das Molekulargewicht des erhaltenen Polymers immer unter 20 000 und bevorzugt unter 10 000 liegt.

3. Wäßrige Lösungen nach Anspruch 1 oder 2, dadurch gekennzeichnet, daß die Konzentration des Tracers proportional zur Polymerkonzentration ist.

4. Verfahren, um wäßrige Lösungen von Copolymeren und/oder Terpolymeren aus Monomeren der Acryl- und/oder Methacrylsäuren, ihren Natrium-, Kalium- oder Ammoniumsalzen, aromatischen und aliphatischen Derivaten dieser Säuren und Derivate mit Phenyl, p-Hydroxyphenyl, Phenyl-4-sulfonsäure, 1-Naphthyl und 2-Naphthyl, 4-Hydroxy-2-naphthyl, 2-Naphthyl-4-sulfonsäure und anderen Produkten, die von den Phenyl- und/oder Naphthylgruppen abstammen, zu erhalten, dadurch gekennzeichnet, daß zumindest eines der Polymerisationsmonomere ein fluoreszierender Tracer mit der allgemeinen Formel I ist: 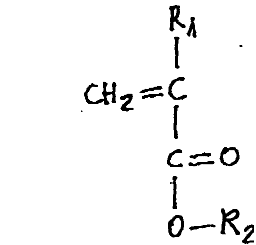 wobei
R₁ einem Wasserstoff-, Methyl- oder Hydroxylrest entspricht;
R₂ einem Phenyl-, p-Hydroxyphenyl-, p-Phenyl-sulfonsäure-, 2-Naphthyl-, 4-Hydroxy-2-naphthyl, 2-Naphthyl-4-sulfonsäurenrest oder anderen Derivaten mit Phenyl- und/oder Naphthylgruppen entspricht wobei wenn sie chemisch verbunden werden, das Copolymer und/oder Terpolymer ausgebildet wird und es, insbesondere in Wasserbehandlungsystemen, nachweisbar und seine Konzentration bestimmbar ist.

5. Verfahren, um wäßrige Lösungen nach Anspruch 4 zu erhalten, bestehend aus der Polymerisation in einem wäßrigen Medium von Monocarbonsäuren mit einer Ethylenbindung im Molekül und mit maximal 6 Kohlenstoffatomen, aliphatischen Estern dieser Säuren mit linearen Alkoholen mit 1-3 Kohlenstoffatomen und Estern der gleichen Säuren mit aromatischen Alkoholen, dadurch gekennzeichnet, daß sie 1-3 kondensierte Benzolringe an den Rest der Säure in der Position "zwei" und möglicherweise Substituenten wie -OH oder -SO₃H in der Position "vier" angebunden enthalten.

6. Verfahren, um wäßrige Lösungen nach Anspruch 4 zu erhalten, dadurch gekennzeichnet, daß die für dieses Verfahren verwendeten Katalysatoren entweder eine Mischung aus Ammonium-, Natrium- oder Kaliumsalzen von Perschwefelsäure, Wasserstoffperoxid oder organischen Peroxiden sind oder alternativ Oxidations-Reduktionspaare der oben beschriebenen Chemikalien mit Natriummetabisulfat, Natriumbisulfat, Ascorbinsäure oder Thioglykolsäure sind.

7. Verwendung von wäßrigen Lösungen nach einem der Ansprüche 1-3 zur automatischen Bestimmung der Polymerkonzentration in Industriewasser.

## Revendications

1. Solutions aqueuses de copolymères et/ou terpolymères obtenus à partir de monomères d'acides acrylique et/ou méthacrylique, leurs sels de sodium, potassium ou ammonium, de dérivés aliphatiques desdits acides avec des alcools linéaires contenant 1 à 3 atomes de carbone et dérivés desdits acides avec des groupes phényle, para-hydroxyphényle, phényl-4-sulfonique, 1-naphtyle, 2-naphtyle, 4-hydroxy-2-naphtyle, 2-naphtyl-4-sulfonique et d'autres produits dérivés des groupes phényle et/ou napthtyle, caractérisées en ce qu'au moins l'un desdits monomères est un traceur fluorescent qui correspond à la formule générale I : 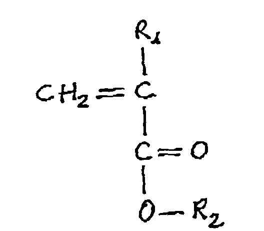 où :
R₁ correspond à un atome d'hydrogène, un radical méthyle ou hydroxyle,
R₂ correspond à un radical tel qu'un phényle, para-hydroxyphényle, para-phénylsulfonique, 1-naphtyle, 2-naphtyle, 4-hydroxy-2-naphtyle, 2-naphtyl-4-sulfonique ou d'autres dérivés des groupes phényle et/ou naphtyle
grâce à quoi, lorsqu'il est combiné chimiquement pour former le copolymère et/ou terpolymère, ledit monomère transfert ses propriétés de fluorescence.

2. Solutions aqueuses selon la revendication 1, dans lesquelles les polymères répondent à la formule générale II : 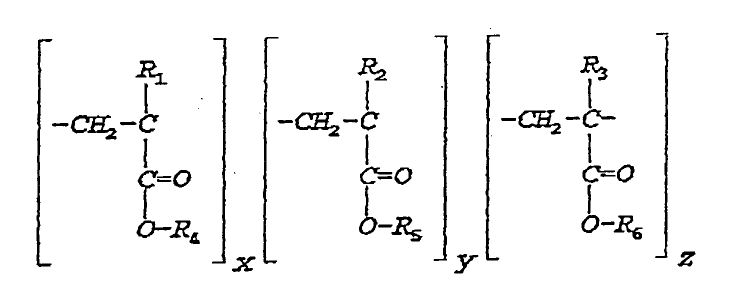 où :
R₁, R₂ et R₃ correspondent à un atome d'hydrogène, des radicaux méthyle ou hydroxyle,
R₄ correspond à un atome d'hydrogène, ou des radicaux sodium, potassium ou ammonium,
R₅ correspond à des radicaux tels que méthyle, éthyle, n-propyle,
R₆ correspond à des radicaux tels que phényle, para-hydroxyphényle, phényl-4-sulfonique, 1-naphtyle, 2-naphtyle, 4-hydroxy-2-naphtyle, 2-naphtyl-4-sulfonique ou d'autres dérivés des groupes phényle et/ou naphtyle,
x, y et z, exprimés en pourcentages molaires de la quantité totale des polymères, peuvent varier entre les limites suivantes :
x entre 70 et 90
y entre 5 et 30
z jusqu'à 5
dans tous les cas, le poids moléculaire du polymère obtenu est toujours inférieur à 20 000 et de préférence inférieur à 10 000.

3. Solutions aqueuses selon la revendication 1 ou 2, caractérisées en ce que la concentration du traceur est proportionnelle à la concentration du polymère.

4. Procédé pour l'obtention de solutions aqueuses de copolymères et/ou terpolymères à partir de monomères d'acides acrylique et/ou méthacrylique, leurs sels de sodium, potassium ou ammonium, de dérivés aliphatiques et aromatiques desdits acides et de dérivés avec des groupes phényle, para-hydroxyphényle, phényle 4-sulfonique, 1-naphtyle et 2-naphtyle, 4-hydroxy-2-naphtyle, 2-naphtyl-4-sulfonique et d'autres produits dérivés des groupes phényle et/ou naphtyle, caractérisés en ce qu'au moins l'un desdits monomères de polymérisation est un traceur fluorescent répondant à la formule générale I : 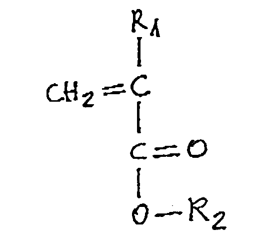 où :
R₁ correspond à un radical hydrogène, méthyle ou hydroxyle,
R₂ correspond à un radical phényle, parahydroxyphényle, para-phényl-sulfonique, 2-naphtyle, 4-hydroxy-2-naphtyle, 2-naphtyl-4-sulfonique ou d'autres dérivés des groupes phényle et/ou naphtyle,
grâce à quoi lorsqu'il est combiné chimiquement pour former le copolymère et/ou terpolymère, il peut être détecté et sa concentration déterminée, en particulier dans des systèmes de traitement d'eau.

5. Procédé pour obtenir des solutions aqueuses selon la revendication 4, qui consiste à polymériser dans un milieu aqueux des acides monocarboxyliques avec une liaison éthylénique dans la molécule et avec un maximum de six atomes de carbone, des esters aliphatiques desdits acides avec des alcools linéaires contenant un à trois atomes de carbone et des esters de ces mêmes acides avec des alcools aromatiques caractérisés en ce qu'ils comprennent un à trois cycles benzéniques condensés joints au reste de l'acide en position « deux » et éventuellement avec des substituants tels que -OH ou -SO₃H en position « quatre ».

6. Procédé pour l'obtention de solutions aqueuses selon la revendication 4, caractérisé en ce que les catalyseurs utilisés pour ledit procédé sont soit un mélange de sels d'ammonium, sodium ou potassium d'acide persulfurique, de peroxyde d'hydrogène ou de peroxydes organiques soit, alternativement, sont des couples oxydo-réducteurs des produits chimiques précédemment mentionnés avec le métabisulfate de sodium, le bisulfate de sodium, l'acide ascorbique et l'acide thioglycolique.

7. Utilisation de solutions aqueuses selon l'une quelconque des revendications 1 à 3 pour la détermination automatique de la concentration en polymères dans des eaux industrielles.
